# EUROPEAN PATENT APPLICATION

(11) **EP 1 195 331 A2**
(43) Date of publication of application: **10.04.2002**
(21) Application number: 01202885.8
(22) Date of filing: 30.07.2001
(51) Int. Cl.: B65D 19/44

(54) **Mobile container for transporting goods**

(30) Priority: 28.07.2000 NL 1015836
(71) Applicant: Schepers, Klaas, 7841 GG Sleen (NL)
(72) Inventor: Schepers, Klaas, 7841 GG Sleen (NL)
(74) Representative: 't Jong, Bastiaan Jacob

(57) **Abstract**

The invention relates to a rolling container (75) comprising a rectangular plate-like chassis (66) provided with two rigid castors and two swivel castors, uprights (76,77) arranged close to the four corners, a number of carrier trays (78) which are vertically displaceable along two adjoining sliding uprights, and wherein the two other uprights are provided with supports (89) for opposite ends of the carrier trays.

## Description

The invention relates to a rolling container comprising a rectangular plate-like chassis provided with two rigid castors and two swivel castors.

Such rolling containers are generally known under the designation "rollies" or "dollies".

Such rolling containers are used to transport goods from a manufacturer to a customer. This may take place via an auction, a transhipment company, a distribution centre and the like.

The goods, usually packed in boxes or the like, are transported stacked on the rolling container. Transport takes place very efficiently because the goods do not have to be repacked onto other transport means.

At the end of the transport chain the goods will normally be placed at a retail outlet or the like in sales display stands at locations where they can be seen by consumers and can be purchased.

The invention has for its object to further improve a rolling container of the type specified in the preamble, whereby use thereof becomes even more efficient.

This objective is achieved according to the invention with the rolling container as characterized in claim 1. It is hereby no longer necessary to remove the transported goods from the rolling container and to place them in sales display stands. The goods for sale are set out directly on the carrier trays in easily accessible manner. There are therefore practically no further additional operations required in order to set out the goods for sale in a manner immediately visible to the public.

The measure of claim 2 is suitably applied herein. When the rolling container is empty, i.e. when all goods have been removed therefrom, the carrier trays can all be placed in a low position and the protruding uprights can be made shorter by taking them apart or folding them down. The empty rolling container can thus be transported efficiently.

Another suitable embodiment is characterized in claim 3.

When the carrier trays comprise supports fitting closely round the sliding uprights, the carrier trays can remain suspended of their own accord on the sliding uprights owing to the tilting effect of this support. The uprights provided with supports can then for instance be removed to obtain a good access to the goods.

The invention will be further elucidated in the following description with reference to the annexed figures.

Figure 1 shows a rolling container in a preferred embodiment of the device according to the invention.

Figure 2 shows a cross-section through uprights of the rolling container of figure 1.

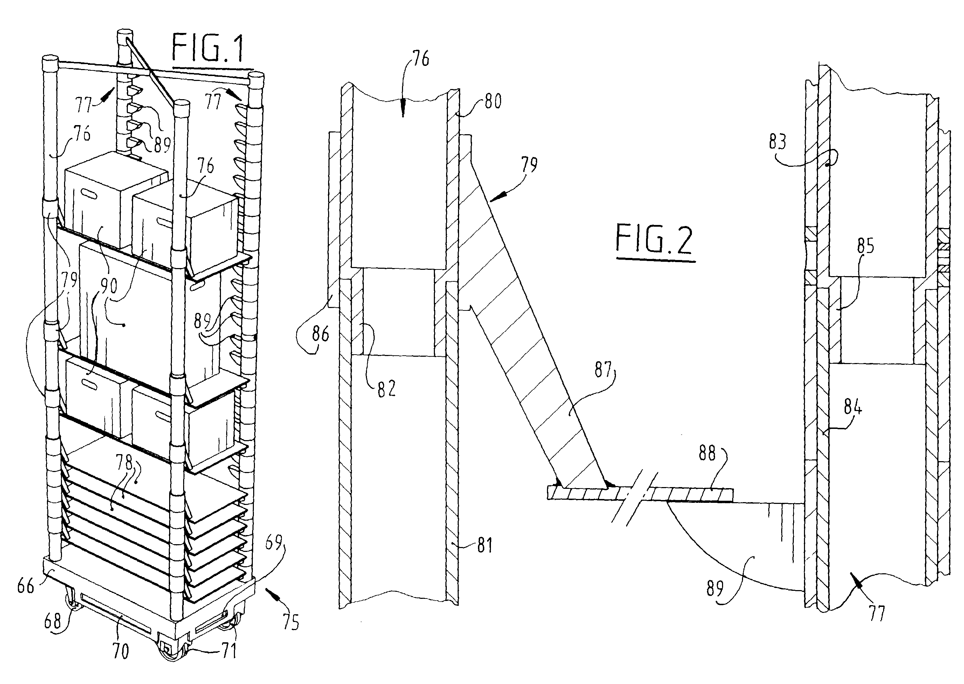

The rolling container 75 shown in figure 1 is constructed on an actual rolling container. This rolling container 75 has a chassis. Wheels 68, 71 are connected in usual manner to chassis 66. Formed in this rolling container are slots 69,70 which allow the insertion of a fork of a fork-lift truck. Four uprights 76, 77 are arranged on the actual rolling container. A number of carrier trays 78 are mounted on sliding uprights 76 for vertical displacement with slidable supports 79. The opposite uprights 77 carry a number of swivel supports 89 which can be swivelled under the carrier trays to support these latter on uprights 77.

Carrier trays 78 can be pushed to a height such that the space formed between two successive carrier trays is just high enough to accommodate specific goods 90.

For empty transport all the carrier trays 78 can slide downward so that they take up little space. Uprights 76, 77 herein take a divisible form. Upright 76 comprises for this purpose a lower part 81 and an upper part 80 which is pushed into lower part 81 using an insert element 82. In analogous manner the upright 77 comprises a lower part 84 and an upper part 83 which is placed therein using insert element 85. When all carrier trays 78 are pushed downward, uprights 76, 77 can thus be halved in height, so that the total space taken up by rolling container 75 remains limited.

As shown particularly in figure 2, the holder 79 comprises a sleeve-like element 86 which closes round the upright 76. When the actual carrier tray 78 is loaded, the holder 79 will clamp fast to the upright 76 due to a tilting effect. Holder 79 is hereby held in place at the set height.

It is thus possible to arrange the rolling container 75 provided with goods 90 in a salesroom and to therein remove the support uprights 77. The carrier trays remain at the set height due to this tilting action of holders 79 and, because of the absence of uprights 77, purchasers can gain ready access to goods 90. The support uprights 77 are used particularly to support the carrier trays 78 during transport. For this purpose the rotatable supports 89 are rotated under carrier trays 78.

## Claims

1. Rolling container comprising a rectangular plate-like chassis provided with two rigid castors and two swivel castors, uprights arranged close to the four corners, a number of carrier trays which are vertically displaceable along two adjoining sliding uprights, and wherein the two other uprights are provided with supports for opposite ends of the carrier trays.

2. Rolling container as claimed in claim 1, wherein the uprights comprise a number of parts for insertion into each other.

3. Rolling container as claimed in claim 2, wherein the uprights are telescopically extendable.

4. Rolling container as claimed in any of the claims 1-3, wherein the carrier trays comprise supports fitting closely round the sliding uprights.
